# EUROPEAN PATENT APPLICATION

(11) **EP 3 297 233 A1**
(43) Date of publication of application: **21.03.2018**
(21) Application number: 16810810.8
(22) Date of filing: 13.04.2016
(51) Int. Cl.: H04L 12/927

(54) **METHOD AND DEVICE FOR ALLOCATING GATEWAY-SIDE NETWORK RESOURCE**

(30) Priority: 17.06.2015 CN 201510339236
(71) Applicant: ZTE Corporation, Shenzhen, Guangdong 518057 (CN)
(72) Inventor: MA, Senlin, Shenzhen Guangdong 518057 (CN)
(74) Representative: Awapatent AB
(86) International application number: PCT/CN2016/079195
(87) International publication number: WO 2016/202069

(57) **Abstract**

A method and device for allocating a network resource at a gateway side are provided. The method includes: acquiring a priority of a port at the gateway side and/or a priority of a service at the gateway side from configuration information; and allocating the network resource to an online operation at the gateway side according to the priority. The technical scheme described above implements allocation of the network resources according to the priorities through the configuration at the gateway side, and resolves the problem of mutual influence of the related services.

## Description

### Technical Field

This document relates to, but is not limited to, the field of communication, and more particularly, to a method and device for allocating a network resource at a gateway side.

### Background

As network services change rapidly, users' demand on a home gateway is higher and higher. Since the scope of services that can be enjoyed at the user side becomes more and more extensive and there are a wide variety of services, although network bandwidth is improved with the development of technologies, cost of surfing the Web will increase accordingly as well. In a balance situation, distinguishing for service priorities at the local area network (LAN) side is vital. However, it is difficult for most of the users, who are not professional, to configure the home gateway. Even viewing a manual, page setup is quite burdensome, and moreover, the home gateway needs to be connected through a personal computer (PC).

At present, in online services of the related art, the online services used more frequently by home users include downloading, game, watching videos online, etc. In the case of multiple services as traffic flows, when high-speed downloading occupies most part of bandwidth, access speed of other services will be bound to be affected. For example, smoothness of online videos will be affected.

A solution for configuring network resources is not provided in the related art. An efficient solution to the problem that different services affect with each other is not provided.

### Summary

The following is a summary of the subject matter described herein in detail. This summary is not intended to limit the protection scope of the claims.

Embodiments of the present invention provide a method and device for allocating a network resource at a gateway side to implement allocation of the network resources and avoid mutual influence of different services.

According to one aspect of the present invention, a method for allocating a network resource at a gateway side is provided. The method includes:
acquiring a priority of a port at the gateway side and/or a priority of a service at the gateway side from configuration information; and allocating a network resource to an online operation at the gateway side according to the priority.

In an exemplary embodiment, when the priority is a priority of the service at the gateway side, allocating the network resource to the online operation at the gateway side includes: allocating a corresponding network resource to each of the services at the gateway side for the online operations at the gateway side according to the priorities of the services at the gateway side.

In an exemplary embodiment, when the priority is a priority of the port at the gateway side, allocating the network resource to the online operation at the gateway side includes: allocating a corresponding network resource to each of the ports at the gateway side corresponding to the online operations at the gateway side according to the priorities of the ports at the gateway side.

In an exemplary embodiment, when the priority is a priority of the port at the gateway side and a priority of the service at the gateway side, allocating the network resource to the online operation at the gateway side includes: allocating a corresponding network resource to each of the ports at the gateway side corresponding to the online operations at the gateway side according to the priorities of the ports at the gateway side; and
after the allocation of the network resources to the ports at the gateway side is completed, allocating a corresponding network resource to a service at the gateway side on each of the ports at the gateway side according to the priorities of the services at the gateway side.

In an exemplary embodiment, the method further includes: before acquiring the priority of the port at the gateway side and/or the priority of the service at the gateway side from the configuration information,
receiving a configuration instruction from a user to trigger to configure the priority of the port at the gateway side and/or the priority of the service at the gateway side; and
displaying configured priority information of the ports at the gateway side and/or the services at the gateway side.

According to another aspect of the present invention, a device for allocating a network resource at a gateway side is provided. The device includes:
an acquisition module configured to acquire a priority of a port at the gateway side and/or a priority of a service at the gateway side from configuration information; and
an allocation module configured to allocate a network resource to an online operation at the gateway side according to the priority.

In an exemplary embodiment, the allocation module includes a first allocation unit configured to, when the priority is a priority of the service at the gateway side, allocate a corresponding network resource to each of the services at the gateway side for the online operations at the gateway side according to the priorities of the services at the gateway side.

In an exemplary embodiment, the allocation module includes a second allocation unit configured to, when the priority is a priority of the port at the gateway side, allocate a corresponding network resource to each of the ports at the gateway side corresponding to the online operations at the gateway side according to the priorities of the ports at the gateway side.

In an exemplary embodiment, the allocation module includes a third allocation unit configured to, when the priority is a priority of the port at the gateway side and a priority of the service at the gateway side, allocate a corresponding network resource to each of the ports at the gateway side corresponding to the online operations at the gateway side according to the priorities of the ports at the gateway side; and after the allocation of the network resources to the ports at the gateway side is completed, allocate a corresponding network resource to a service at the gateway side on each of the ports at the gateway side according to the priorities of the services at the gateway side.

In an exemplary embodiment, the apparats further includes a triggering module configured to receive a configuration instruction from a user to trigger to configure the priority of the port at the gateway side and/or the priority of the service at the gateway side; and
a display module configured to display configured priority information of the ports at the gateway side and/or the services at the gateway side.

Compared with the related art, the technical scheme provided by the embodiments of the present invention includes: acquiring a priority of a port at the gateway side and/or a priority of a service at the gateway side from configuration information and then allocating the network resource to an online operation at the gateway side according to the priority. Therefore, the technical scheme implements allocation of the network resources according to the priorities through the configuration at the gateway side, and resolves the problem of mutual influence of the related services.

After the accompanying drawings and detailed description are read and understood, other aspects can be understood.

### Brief Description of Drawings

FIG. 1 is a flow chart of a method for allocating a network resource at a gateway side in accordance with an embodiment of the present invention.
FIG. 2 is a structural block diagram of a device for allocating a network resource at a gateway side in accordance with an embodiment of the present invention.
FIG. 3 is an alternative structural block diagram one of a device for allocating a network resource at a gateway side in accordance with an embodiment of the present invention.
FIG. 4 is an alternative structural block diagram two of a device for allocating a network resource at a gateway side in accordance with an embodiment of the present invention.
FIG. 5 is an alternative structural block diagram three of a device for allocating a network resource at a gateway side in accordance with an embodiment of the present invention.
FIG. 6 is an alternative structural block diagram four of a device for allocating a network resource at a gateway side in accordance with an embodiment of the present invention.
FIG. 7 is a schematic diagram of functional modules in accordance with an alternative embodiment of the present invention.
FIG. 8 is a flow chart of configuring an online priority and related functions in accordance with an alternative embodiment of the present invention.
FIGs. 9a-9g are schematic diagrams of a module configuration interface in accordance with an alternative embodiment of the present invention.
FIG. 10 is a flow chart of implementing allocation of network resources based on priorities in accordance with an alternative embodiment of the present invention.

### Detailed Description

Embodiments of the present application will be described in detail below in conjunction with the accompanying drawings. It should be noted that the embodiments in the present application and features in the embodiments can be combined with each other arbitrarily without conflicts.

It should be noted that the terms "the first", "the second" and the like in the specification and claims of the present invention and the accompanying drawings described above are used for distinguishing between similar objects, and are not necessarily intended to describe a specific order or an order of precedence.

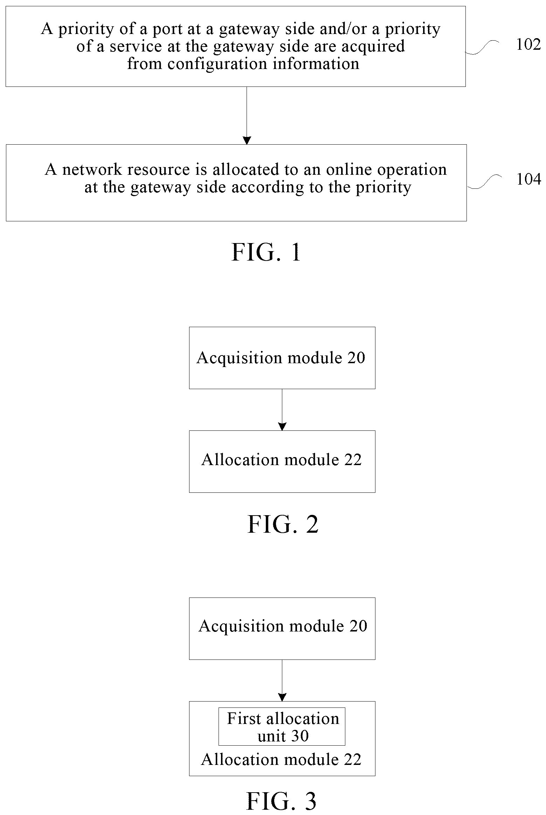

In the present embodiment, a method for allocating a network resource at a gateway side is provided. FIG. 1 is a flow chart of a method for allocating a network resource at a gateway side according to the embodiment of the present invention. As shown in FIG. 1, the method includes the following steps S102-S104.

In step 102, a priority of a port at the gateway side and/or a priority of a service at the gateway side are acquired from configuration information.

In an exemplary embodiment, the configuration information includes configuration information preset at the gateway side, or a configuration file generated according to a configuration instruction of a user, or a configuration file generated according to the configuration instruction of the user or the configuration information preset at the gateway side. The gateway side includes switches, routers, etc. In the present embodiment, the gateway alternatively is a home router.

In step 104, a network resource is allocated to an online operation at the gateway side according to the priority of the port at the gateway side and/or the priority of the service at the gateway side.

It should be noted that the online operation at the gateway side includes the online operations of the user at the gateway side.

In an exemplary embodiment, in the process of implementing the method in accordance with the embodiment of the present invention, taking the home router as an example, firstly packets of the services at the gateway side passing through the home router are grouped, then the grouped packets enter into a queue. According to the priority of the port at the gateway side and/or the priority of the service at the gateway side acquired from the configuration information in the step 102, packets with higher priorities of the services at the gateway side will acquire preferentially the network resources for transmission, i.e., the packets with higher priorities will be sent out earlier than other services at the gateway side with lower priorities. By the above way, the packets in the queue are scheduled to implement the allocation of network resources.

In embodiments of the present invention, the priorities of the ports at the gateway side and/or the services at the gateway side are acquired from the configuration information, and then the network resources are allocated to the online operations at the gateway side according to the priorities, therefore the allocation of the network resources are implemented by configuring the priorities at the gateway side, thereby achieving the effect of implementing the allocation of the network resources according to the priorities through the configuration information.

In one alternative implementation mode of embodiments of the present invention, when the priority is a priority of a service at the gateway side, allocating the network resource to the online operation at the gateway side includes: a corresponding network resource is allocated to each of the services at the gateway side for the online operations at the gateway side according to the priorities of the services at the gateway side.

Herein, the priorities of the services at the gateway side include the priorities divided according to online services, which may include a video service, a downloading service, a wireless network service, etc. If the priority of the video service is shown to be the highest in the configuration information, then the gateway side performs grouping according to the types of the services at the gateway side when the gateway side processes the received network packets, forms a packet queue in group, and then allocates preferentially the network resources to packets of a group of a packet queue containing the video service and forwards the packets.

In another alternative implementation mode of the embodiments of the present invention, when the priority is a priority of the port at the gateway side, allocating the network resource to the online operation at the gateway side includes: a corresponding network resource is allocated to each of the ports at the gateway side corresponding to the online operations at the gateway side according to the priorities of the ports at the gateway side.

Herein, taking a home router as an example, the priorities of the ports at the gateway side include a priority of each of the ports at the gateway side divided according to local area network (LAN) ports of the home router. By firstly numbering the acquired physical addresses of the ports according to the priorities, for example, when the priority of the first port is shown to be the highest in the configuration information, the home router performs grouping according to the serial numbers of the ports when the home router processes the received network packets, forms a packet queue in group. Then the home router allocates preferentially the network resources to packets of a group where a packet queue corresponding to the first port is located and forwards the packets.

In one alternative implementation mode of the embodiments of the present invention, the priorities are a priority of the port at the gateway side and a priority of the service at the gateway side, allocating the network resource to the online operation at the gateway side includes the following steps 11-12.

In step 11, a corresponding network resource is allocated to each of the ports at the gateway side corresponding to the online operations at the gateway side according to the priorities of the ports at the gateway side.

In step 12, after the allocation of the network resources to the ports at the gateway side is completed, corresponding network resources are allocated to the services at the gateway side on each of the ports according to the priorities of the services at the gateway side.

In an exemplary embodiment, when the priority of the video service of the first port is shown to be the highest in the configuration information, the gateway side performs grouping for the first time according to the serial numbers of the ports when the gateway side processes the received network packets, and forms the first packet queue according to the priority of the port. Then the gateway side groups each group of packets after the first grouping for the second time according to the types of the services at the gateway side, forms the second packet queue according to the priority of each of the services in each group, and allocates preferentially network resources to the packets of the video service passing through the first port and forwards the packets.

According to another alternative implementation mode of the embodiments of the present invention, before the priority of the port at the gateway side and/or the priority of the service at the gateway side are acquired from the configuration information, the method in accordance with the embodiment of the present invention further includes the following steps 21-22.

In step 21, a configuration instruction is received from a user to trigger to configure the priority of the port at the gateway side and/or the priority of the service at the gateway side.

In step 22, the configured priority information of the ports at the gateway side and/or the services at the gateway side is displayed.

In an exemplary embodiment, the home router in the present embodiment further includes a display configured to display interactive information when the user sets the configuration information, and priority information in the configuration information, such that the user can set the priorities at the network side conveniently and visually.

It should be noted that the allocation method in accordance with embodiments of the present invention may be implemented by a device at the gateway side directly, or may be implemented by an allocation device connected to the device at the gateway side.

Through the description of the above embodiments, those skilled in the art can understand clearly that the methods in accordance with the above embodiments may be implemented by means of software plus necessary general hardware platform, or may be implemented by hardware certainly. However, in many cases, the former is the preferred implementation mode. Based on such understanding, the technical scheme of the present invention essentially or portions thereof made contributions to the related art may be embodied in a form of a computer software product, which is stored in a storage medium (such as ROM/RAM, magnetic disk, optical disk). The computer software product includes a number of instructions for a terminal device (which may be a cell phone, a computer, a server or a network device or the like) to execute the methods in accordance with various embodiments of the present invention.

In the present embodiment, a device for allocating a network resource at a gateway side is provided and used to implement the above embodiments and alternative implementation modes. What has been explained will not be repeated herein. As used below, the term "module" may be a combination of software and/or hardware implementing predefined functions. Although the device described in the following embodiments is implemented preferred in software, however, implementation of hardware or a combination of software and hardware is possible and is conceived.

An embodiment of the present invention further provide a computer readable storage medium having computer executable instructions stored therein, and the computer executable instructions are used to implement the method for allocating the network resource.

FIG. 2 is a structural block diagram of a device for allocating a network resource at a gateway side in accordance with an embodiment of the present invention, which, as shown in FIG. 2, includes an acquisition module 20 and an allocation module 22.

The acquisition module 20 is configured to acquire a priority of a port at the gateway side and/or a priority of a service at the gateway side from configuration information.

In an exemplary embodiment, the configuration information acquired by the acquisition module 20 includes configuration information preset at the gateway side, or a configuration file generated according to a configuration instruction of a user, or a configuration file generated according to the configuration instruction of the user or the configuration information preset at the gateway side. The gateway side in the allocation device in accordance with the embodiments of present invention includes switches, routers, etc. In the present embodiment, the gateway alternatively includes a home router.

The allocation module 22 is configured to allocate a network resource to the online operation at the gateway side according to the priority. In the allocation device in accordance with the embodiments of present invention, the allocation module 22 may be coupled to the acquisition module 20.

In an exemplary embodiment, in the implementing process in accordance with an embodiment of the present invention, taking the home router as an example, the allocation module 22 may firstly group packets of the services at the gateway side passing through the home router. Then the grouped packets enter into a queue, and according to the priorities in the configuration information, packets with higher priorities of the services at the gateway side will acquire preferentially the network resources for transmission, i.e., the packets will be sent out earlier than other services at the gateway side with lower priorities. By the above way, the packets in the queue can be scheduled to implement the allocation of network resources.

Through the embodiments of the present invention, the acquisition module 20 acquires the priority of the port at the gateway side and/or the priority of the service at the gateway side from the configuration information, and then the allocation module 22 allocates the network resource to the online operation at the gateway side according to the priority, and thereby the terminal configures the priorities at the gateway side to implement the allocation of the network resources, further achieving the effect of implementing the allocation of the network resources through the configuration at the gateway side.

FIG. 3 is an alternative structural block diagram one of a device for allocating a network resource at a gateway side in accordance with an embodiment of the present invention. As shown in FIG. 3, the allocation module 22 further includes a first allocation unit 30 configured to, when the priority is a priority of the service at the gateway side, allocate a corresponding network resource to each of the services at the gateway side for the online operations at the gateway side according to the priorities of the services at the gateway side.

The priorities of the services at the gateway side are the priorities divided according to online services, which may include a video service, a downloading service, a wireless network service, etc. If the priority of the video service is shown to be the highest in the configuration information, then the first allocation unit 30 performs grouping according to the types of the services at the gateway side when the first allocation unit 30 processes the received network packets, forms a packet queue in group, and then allocates preferentially the network resources to packets of the group of the packet queue containing the video service and forwards the packets.

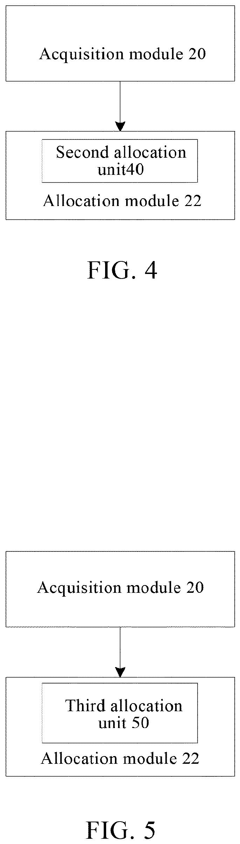

FIG. 4 is an alternative structural block diagram two of a device for allocating a network resource at a gateway side in accordance with an embodiment of the present invention. As shown in FIG. 4, the allocation module 22 further includes a second allocation unit 40 configured to, when the priority is a priority of the port at the gateway side, allocate the corresponding network resource to each of the ports at the gateway side corresponding to the online operations at the gateway side according to the priorities of the ports at the gateway side.

Taking a home router as an example, the priorities of the ports at the gateway side include the priorities divided according to LAN ports of the home router. The second allocation unit 40 may firstly number the acquired physical addresses of the ports according to the priorities, for example, when the priority of the first port is shown to be the highest in the configuration information, the home router performs grouping according to the serial numbers of the ports when the home router processes the received network packets, forms a packet queue in group, and then allocates preferentially the network resources to packets of a group where a packet queue corresponding to the first port is located and forwards the packets.

FIG. 5 is an alternative structural block diagram three of a device for allocating a network resource at a gateway side in accordance with an embodiment of the present invention. As shown in FIG. 5, the allocation module 22 further includes a third allocation unit 50. The third allocation unit 50 is configured to, when the priorities are a priority of the port at the gateway side and a priority of the service at the gateway side, allocate a corresponding network resource to each of the ports at the gateway side corresponding to the online operations at the gateway side according to the priorities of the ports at the gateway side; and after the allocation of the network resources to the ports at the gateway side is completed, allocate corresponding network resources to the services at the gateway side on each of the ports according to the priorities of the services at the gateway side.

In an exemplary embodiment, when the priority of the video service of the first port is shown to be the highest in the configuration information, the third allocation unit 50 performs grouping for the first time according to the serial numbers of the ports when the third allocation unit 50 processes the received network packets, forms the packet queue according to the priorities of the ports, and then groups each group of packets after the first grouping for the second time according to the types of the services at the gateway side, and allocates preferentially network resources to the packets of the video service of the first port after the second grouping and forwards the packets.

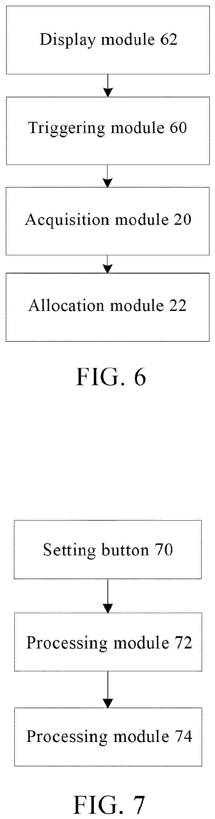

FIG. 6 is an alternative structural block diagram four of a device for allocating a network resource at a gateway side in accordance with an embodiment of the present invention. As shown in FIG. 6, the device further includes a triggering module 60 and display module 62 in addition to the acquisition module 20 and the allocation module 22 in the embodiments described above.

The triggering module 60 is configured to receive a configuration instruction from a user to trigger to configure the priority of the port at the gateway side and/or the priority of the service at the gateway side. The triggering module 60 is coupled to the acquisition module 20 in the embodiment of the present invention.

The display module 62 is configured to display the configured priority information of the ports at the gateway side and/or the services at the gateway side. The display module 62 is coupled to the triggering module 60.

In an exemplary embodiment, the home router in the present embodiment further includes a display module 62, such as a display, used to display interactive information when the user sets the configuration information, and priority information in the configuration information, such that the user can set the priorities at the network side conveniently and visually.

It should be noted that various modules described above may be implemented through software or hardware. The latter may be implemented in the following ways, but is not limited thereto: all of the modules are located in the same processor; or the modules are located in multiple processors respectively.

The present invention will be described in detail below in conjunction with the alternative embodiments. Mainly from the perspective of the user's usage experience, FIG. 7 is a schematic diagram of functional modules in accordance with an alternative embodiment of the present invention. As shown in FIG. 7, the device includes a setting button 70, a processing module 72 and a display module 74, which are integrated on a mainboard of the home gateway, such that on the premise of implementation of all functions of the original home gateway, the user can configure an online priority rapidly according to his/her own requirements.

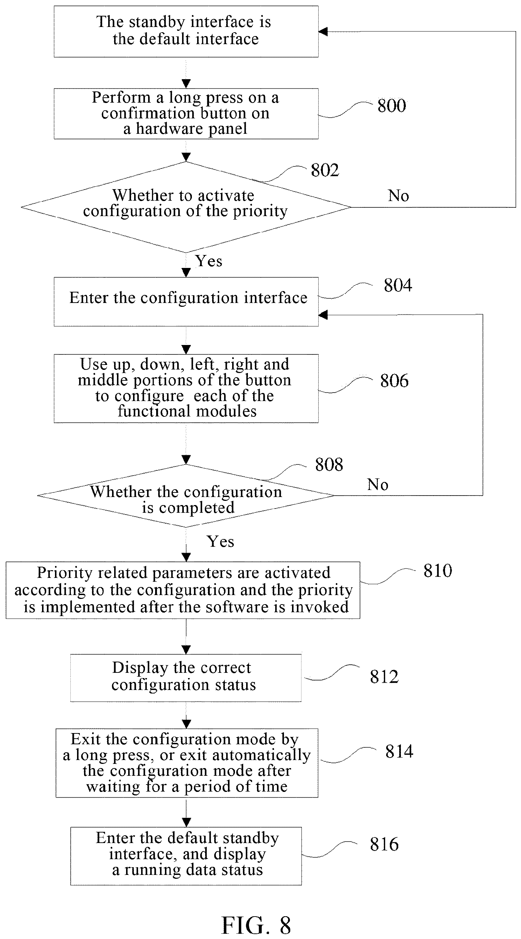

FIG. 8 is a flow chart of configuring the online priority and the related functions in accordance with an alternative embodiment of the present invention, which, as shown in FIG. 8, includes the following steps 800-816.

When the user gets the home gateway, a liquid crystal display screen enter into a default standby state after power-on, and the user needs to configure the online priority function during the process of use.

In step 800, a long press is performed on a confirmation button on a hardware panel.

In step 802, whether to activate the configuration of the online priority is selected; when the configuration of the online priority is selected to be activated, step 804 will be executed, and when the configuration of the online priority is selected not to be activated, it returns to the standby interface.

In step 804, the configuration interface is entered.

In step 806, up, down, left, right and middle portions of the button are used to perform the configuration of each of the functional modules. Assumed that wireless local area network (wifi) priority based on the IEEE 802.11b standard is configured, because the wifi is used widely and is added as a pre-configuration mode, the pre-configuration is entered and the wifi is selected to be preferential. When the confirmation button is clicked, the software will issue a related gateway configuration that the wifi has the highest priority, and a physical port is bound to a wifi interface automatically, and the priority is set to be the highest priority automatically, and the software implements the priority after invoking the configuration template.

In step 808, it is determined whether the configuration is completed; and the current configuration status is displayed by the display screen, and it is to exit the configuration interface if there is no error, otherwise the step 804 will be executed.

In step 810, priority related parameters are activated according to the configuration and the priority is implemented after the software is invoked.

In step 812, the correct configuration status is displayed.

In step 814, it is to exit a configuration mode by a long press, or exit automatically the configuration mode after waiting for a period of time.

In step 816, the standby interface is the default interface, and a running data status is displayed on the standby interface.

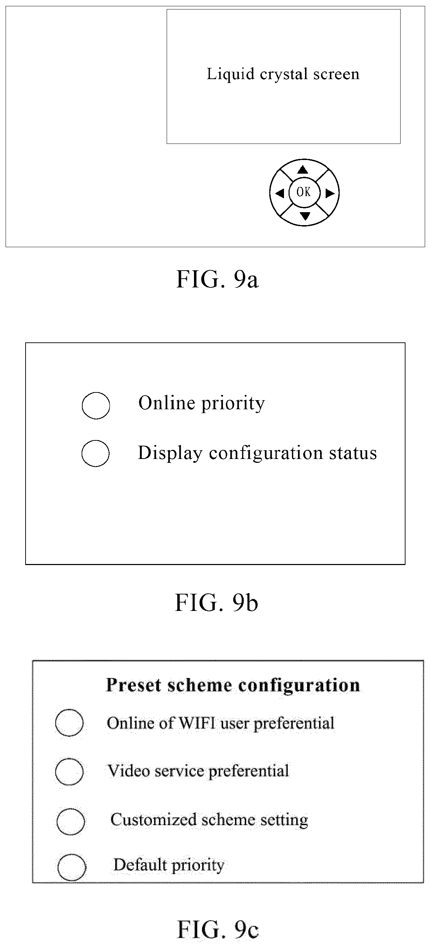

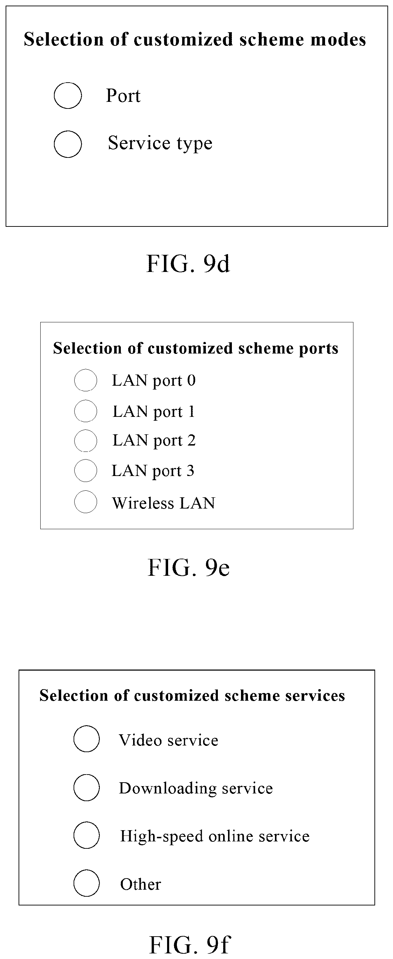

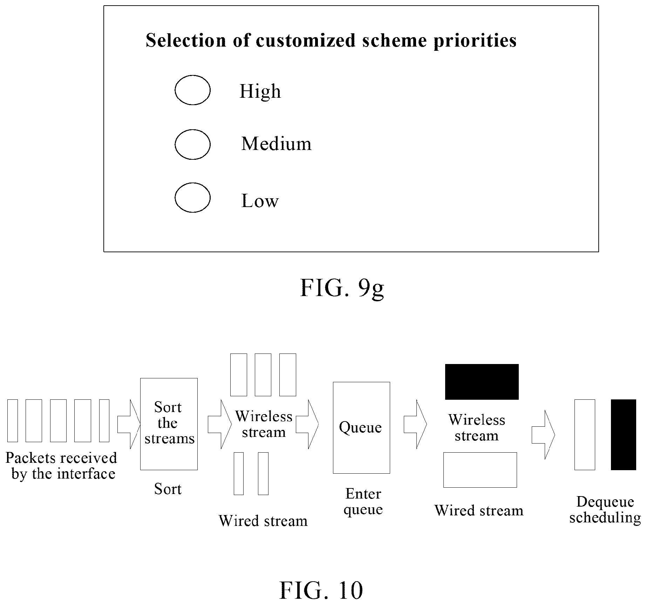

FIGs. 9a-9g are schematic diagrams of a module configuration interface in accordance with an alternative embodiment of the present invention. As shown in FIGs. 9a-9g, mechanism display views of a newly added button and a display screen on a surface of a device shell are represented. As shown in FIG. 9a, when the user needs to perform a configuration, the user performs a long press on an OK key in the middle of the outer button to enter into a configuration menu, and then the liquid crystal screen displays contents including the online priority and the display configuration status, as shown in FIG. 9b. A module to be configured is determined by upward and downward movement of the button. For example, if the online priority is selected, the right portion of the button is pressed or the OK key is pressed directly after the selection of the online priority, such that a submenu is entered. It may be found that the online priority presets two configurations, one is a configuration based on wifi, and the other is a configuration based on video services, both of which are commonly used by the user. Thus the user having a demand on the two configurations can implement the configuration of the online priority by one-key operation, such that the device is more inclined to intelligentization. If the user does not want to use the priority after the configuration is completed, an option of recovering the default priority is provided herein as well, to shut down the priority function quite conveniently. Of course, in the case that the environment at the LAN side is relatively complicated and the number of accesses is lager, a customized scheme setting menu may be provided to add rapidly configuration of online preferential as well, as shown in FIG. 9c. After entering into the customized setting by pressing the right portion of the button, two kinds of selections, port and service types, will be found, as shown in FIG. 9d. After the port is selected, the right portion of the button is pressed to select the Ethernet port at the LAN side and the wireless local area network (WLAN), as shown in FIG. 9e. Assumed that after LAN0 is selected, then the right portion of the button is pressed to enter the priority configuration, i.e., high, medium and low, as shown in FIG. 9f. In the priority configuration interface, the left portion of the button is pressed to go back to the previous menu and enter into service types to select a service type, and there are four options, i.e., a video service, a downloading service, an online service and other services, as shown in FIG. 9g. When the level of the priority to be configured is determined, the middle of button is pressed to make the selection. After the configuration is completed, the current configuration is checked by displaying the configuration status. If there is no error, it is to exit the configuration interface by a long press, and then the liquid crystal screen displays the status of all current functional modules according to the previous setting to facilitate the user to view.

FIG. 10 is a flow chart of implementing allocation of network resources based on priorities in accordance with an alternative embodiment of the present invention. As shown in FIG. 10, when the wired and wireless packets enter an interface, the packets are grouped firstly, and then enter into a queue. The wireless packets are sent out firstly according to a priority rule of the configuration described above, and the packets in the queue are scheduled to implement the priorities.

Issuing of configuration commands by a software is triggered through a multifunctional button on hardware, such that priorities of services at the LAN side of the home gateway are easier to configure, to ensure to the most extent that the user can select the service types, satisfying the requirements of the user.

In products of this alternative embodiment, a liquid crystal screen and a multifunctional button are added to the face of the device shell, and intelligent selection of the online priorities of the ports and the services at the user side is implemented by selecting the up, down, left, right and middle confirmation portions of the button. For universal demand of a large number of users, the priorities based on the wireless and video services are preset by default, in such case, work efficiency of the traditional home gateway configuration is improved greatly and extra devices does not need to be connected jointly.

An embodiment of the present invention further provides a storage medium. In an exemplary embodiment, the storage medium in the present embodiment may be configured to store program codes for executing the following steps 31-32.

In step 31, the priorities of the ports at the gateway side and/or the services at the gateway side are acquired from the configuration information.

In step 32, network resources are allocated to online operations at the gateway side according to the priorities.

Alternatively, the storage medium is further configured to store program codes for executing the following steps.

In the present embodiment, the storage medium described above may include, but is not limited to, a medium, such as USB-stick, Read-Only Memory (ROM), Random Access Memory (RAM), movable hard disk, magnetic disk or optical disk, which can store program codes.

In an exemplary embodiment, the specific examples in the present embodiment may refer to the examples described in the embodiments described above or the alternative embodiments, and will not be repeated herein.

It is apparent to those skilled in the art to understand that various modules or various steps of the present invention described above may be implemented by using general computing apparatuses, and may be centralized on a single computing apparatus or distributed across a network formed from multiple computing apparatuses. In an exemplary embodiment, they can be implemented by program codes executable by the computing apparatuses, thus, they can be stored in storage apparatuses for executing by the computing apparatuses. Moreover, in certain cases, the steps shown or described can be executed in an order different from an order herein. Various modules or various steps of the present invention described above may be implemented by making them one by one into individual integrated circuit modules or by making a plurality of modules thereof into a single integrated circuit module. Thus, the present invention is not limited to the combination of any specific form of hardware and software.

People having ordinary skill in the art can understand that all or part of steps in the methods described above can be carried out by the instructed related hardware (such as processors) through programs, which can be stored in a computer readable storage medium, such as an only read memory, a magnetic disk and an optical disk and the like. Optionally, all or part of steps in the embodiments described above can be carried out by using one or more integrated circuits. Accordingly, each module/unit in the embodiments may be implemented in the form of hardware, for example, by using an integrated circuit to implement their corresponding functions, or may be implemented in the form of a software function module, for example, by executing programs/instructions stored in a memory through a processor to implement their corresponding functions. The present invention is not limited to the combination of any specific form of hardware and software.

Although the embodiments disclosed by the present invention are described above, the described contents are only the embodiments used for easily understanding the present invention, and are not intended to limit the present application, such as the specific implementation methods in the embodiments of the present invention. Any of those skilled in the art, to which the present invention belongs, can make any modification or variation in the form of implementation or details without departing from the essence and scope disclosed by the present invention. However, the protection scope of the present invention should be subject to the scope defined by the appended claims.

### Industrial Applicability

The technical scheme described above implements allocation of the network resources according to the priorities through configuration at the gateway side, resolving the problem of mutual influence of the related services.

## Claims

1. A method for allocating a network resource at a gateway side comprising:
acquiring a priority of a port at the gateway side and/or a priority of a service at the gateway side from configuration information; and
allocating a network resource to an online operation at the gateway side according to the priority.

2. The method according to claim 1, wherein when the priority is a priority of the service at the gateway side, the allocating a network resource to an online operation at the gateway side comprises:
allocating a corresponding network resource to each of the services at the gateway side for the online operations at the gateway side according to the priorities of the services at the gateway side.

3. The method according to claim 1, wherein when the priority is a priority of the port at the gateway side, the allocating a network resource to an online operation at the gateway side comprises:
allocating a corresponding network resource to each of the ports at the gateway side corresponding to the online operations at the gateway side according to the priorities of the ports at the gateway side.

4. The method according to claim 1, wherein when the priority is a priority of the port at the gateway side and a priority of the service at the gateway side, the allocating a network resource to an online operation at the gateway side comprises:
allocating a corresponding network resource to each of the ports at the gateway side corresponding to the online operations at the gateway side according to the priorities of the ports at the gateway side; and
after the allocation of the network resources to the ports at the gateway side is completed, allocating a corresponding network resource to a service at the gateway side on each of the ports at the gateway side according to the priorities of the services at the gateway side.

5. The method according to any one of claims 1-4, wherein the method further comprises: before the acquiring a priority of a port at the gateway side and/or a priority of a service at the gateway side from configuration information,
receiving a configuration instruction from a user to trigger to configure the priority of the port at the gateway side and/or the priority of the service at the gateway side; and
displaying configured priority information of the ports at the gateway side and/or the services at the gateway side.

6. A device for allocating a network resource at a gateway side, comprising:
an acquisition module configured to acquire a priority of a port at the gateway side and/or a priority of a service at the gateway side from configuration information; and
an allocation module configured to allocate a network resource to an online operation at the gateway side according to the priority.

7. The device according to claim 6, wherein the allocation module comprises:
a first allocation unit configured to, when the priority is a priority of the service at the gateway side, allocate a corresponding network resource to each of the services at the gateway side for the online operations at the gateway side according to the priorities of the services at the gateway side.

8. The device according to claim 6, wherein the allocation module comprises:
a second allocation unit configured to, when the priority is a priority of the port at the gateway side, allocate a corresponding network resource to each of the ports at the gateway side corresponding to the online operations at the gateway side according to the priorities of the ports at the gateway side.

9. The device according to claim 6, wherein the allocation module comprises:
a third allocation unit configured to, when the priority is a priority of the port at the gateway side and a priority of the service at the gateway side, allocate a corresponding network resource to each of the ports at the gateway side corresponding to the online operations at the gateway side according to the priorities of the ports at the gateway side; and after the allocation of the network resources to the ports at the gateway side is completed, allocate a corresponding network resource to a service at the gateway side on each of the ports at the gateway side according to the priorities of the services at the gateway side.

10. The device according to any one of claims 6-8, further comprising:
a triggering module configured to receive a configuration instruction from a user to trigger to configure the priority of the port at the gateway side and/or the priority of the service at the gateway side; and
a display module configured to display configured priority information of the ports at the gateway side and/or the services at the gateway side.
